(19) Europäisches Patentamt
European Patent Office
Office européen des brevets

(11) **EP 4 088 513 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **20824173.7**

(22) Anmeldetag: **09.12.2020**

(51) Internationale Patentklassifikation (IPC):
*H04W 40/12* *(2009.01)*    *H04W 84/18* *(2009.01)*
*H04L 45/125* *(2022.01)*    *H04L 45/12* *(2022.01)*

(52) Gemeinsame Patentklassifikation (CPC):
**H04W 40/12;** H04L 45/123; H04L 45/125;
H04W 84/18

(86) Internationale Anmeldenummer:
**PCT/EP2020/085204**

(87) Internationale Veröffentlichungsnummer:
**WO 2021/139949 (15.07.2021 Gazette 2021/28)**

(54) **VERFAHREN ZUR DATENÜBERTRAGUNG UND TECHNISCHE ANLAGE**

METHOD FOR TRANSMITTING DATA, AND TECHNICAL SYSTEM

PROCÉDÉ DE TRANSMISSION DE DONNÉES ET INSTALLATION TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.01.2020 DE 102020000049**

(43) Veröffentlichungstag der Anmeldung:
**16.11.2022 Patentblatt 2022/46**

(73) Patentinhaber: SEW-EURODRIVE GmbH & Co. KG
**76646 Bruchsal (DE)**

(72) Erfinder:
• SLISKOVIC, Maja
  **76275 Ettlingen (DE)**
• SAUER, Christian
  **76689 Karlsdorf-Neuthard (DE)**

(56) Entgegenhaltungen:
• ROY S ET AL: "High-throughput multicast routing metrics in wireless mesh networks", AD HOC NETWORKS, ELSEVIER, AMSTERDAM, NL, vol. 6, no. 6, 1 August 2008 (2008-08-01), pages 878 - 899, XP022688896, ISSN: 1570-8705, [retrieved on 20080527], DOI: 10.1016/J.ADHOC.2007.07.005
• RADI MARJAN ET AL: "LINKORD: link ordering-based data gathering protocol for wireless sensor networks", COMPUTING, SPRINGER, VIENNA, AT, vol. 97, no. 3, 12 July 2014 (2014-07-12), pages 205 - 236, XP035453051, ISSN: 0010-485X, [retrieved on 20140712], DOI: 10.1007/S00607-014-0414-9

EP 4 088 513 B1

**Beschreibung**

Die Erfindung betrifft ein Verfahren zur Datenübertragung zwischen einem ersten Teilnehmer und einem zweiten Teilnehmer eines drahtlosen Netzwerks in einer technischen Anlage, wobei das Netzwerk eine Mehrzahl von Teilnehmern aufweist. Die Erfindung betrifft auch eine technische Anlage, welche ein drahtloses Netzwerk, welches eine Mehrzahl von Teilnehmern aufweist, umfasst.

Bei der technischen Anlage handelt es sich insbesondere um eine industrielle Anwendung, beispielsweise ein Produktionswerk. Bei den Teilnehmern des drahtlosen Netzwerks handelt es sich insbesondere um mobile Systemen der technischen Anlage, beispielsweise um autonom fahrende Fahrzeuge, aber auch um fest installierte Teilnehmer wie Gateways, Access-Points oder Base-Stations. Die Teilnehmer können über das drahtlose Netzwerk miteinander kommunizieren und Daten übertragen.

Aus dem Dokument DE 10 2009 043 060 A1 ist eine technische Anlage bekannt, welche eine Basisstation und eine Mehrzahl von mobilen Robotern umfasst. Jeder der mobilen Roboter weist dabei Kommunikationsmittel auf, mit welchen eine Kommunikationsverbindung zu der Basisstation aufbaubar ist, wenn der Roboter sich innerhalb der Sendereichweite der Basisstation befindet. Die Roboter sind mit ihren Kommunikationsmitteln auch in der Lage, Kommunikationsverbindungen zu anderen Robotern aufzubauen. Die Roboter sowie die Basisstation stellen Teilnehmer eines drahtlosen Netzwerks dar.

In der Netzwerktechnik wird normalerweise eine Kommunikationsverbindung zwischen zwei Netzwerkknoten, also zwischen zwei Teilnehmern, binär als existent oder nicht existent modelliert. Daten werden aufgrund von diesen Informationen über eine geeignete existierende Kommunikationsverbindung übertragen. Dies ist für die Kommunikation über drahtgebundene Netzwerke in Ordnung, da Interferenzen, insbesondere durch Kabelschirmung, praktisch ausgeschlossen sind. Die eventuell notwendige Verteilung des Datenaufkommens über mehrere Kommunikationspfade in einem vermaschten Netzwerk wird über Load-Balancing-Methoden durchgeführt, beispielsweise mit der Shortest-Path-Bridging Methode, die im Standard IEEE802.1aq beschrieben ist.

In einem drahtlosen Netzwerk erscheint die Beschreibung einer einzelnen Kommunikationsverbindung zwischen zwei Teilnehmern binär als existent oder nicht existent nicht zielführend. Wegen Signal-Fading sowie eventuell vorhandenen Interferenzen von den benachbarten Systemen, insbesondere anderen Teilnehmern, kann eine einzelne Kommunikationsverbindung zwar vorhanden sein während die Qualität der Datenübertragung über die Kommunikationsverbindung jedoch nicht zufriedenstellend ist.

Das Dokument DE 10 2010 023 543 A1 offenbart ein Verfahren zur Datenübertragung zwischen Teilnehmern in einem drahtlosen Netzwerk. Dabei werden Daten über einen Datenkanal in sich wiederholenden Rahmen übertragen.

Das Dokument DE 10 2007 017 515 B3 offenbart ein Verfahren zur Datenübertragung zwischen Teilnehmern in einem drahtlosen Netzwerk, insbesondere Videotelefonie oder VoIP. Dabei wird ein Verfahren zur Ermittlung der Link- und Routenmetrik eingesetzt.

Das Dokument US 2016 / 0 094 398 A1 offenbart ein Verfahren zur Datenübertragung zwischen Teilnehmern in einem drahtgebundenen oder drahtlosen Netzwerk.

Das Dokument US 2002 / 0 186 665 A1 offenbart ein Verfahren zur Datenübertragung zwischen Teilnehmern in einem drahtlosen Netzwerk. Dabei ist jeder Knoten in der Lage, Routen anderen Knoten zu ermitteln.

Aus dem Dokument "High-throughput multicast routing metrics in wireless mesh networks" von S. Roy et al., Ad Hoc Networks, Elsevier, Bd. 6, Nr. 6, 1. 2008-08-01, Seiten 878-899, XP022688896, ist ein gattungsgemäßes Verfahren zur Datenübertragung bekannt.

Auch aus dem Dokument "LINKORD: link ordering-based data gathering protocol for wireless sensor networks", Computing, Springer, Bd. 97, Nr. 3, 2014-07-12, Seiten 205-236, XP035453051, ist ein gattungsgemäßes Verfahren zur Datenübertragung bekannt.

Der Erfindung liegt die Aufgabe zugrunde, ein Verfahren zur Datenübertragung zwischen einem ersten Teilnehmer und einem zweiten Teilnehmer eines drahtlosen Netzwerks in einer technischen Anlage, sowie eine technische Anlage, weiterzubilden. Dabei soll insbesondere die Qualität der Datenübertragung verbessert werden. Dieses Verfahren ermöglicht die Kommunikation zwischen zwei Teilnehmern, die nicht direkt miteinander kommunizieren können, und Bewertung der Qualität der indirekten Verbindung.

Die Aufgabe wird durch ein Verfahren zur Datenübertragung zwischen einem ersten Teilnehmer und einem zweiten Teilnehmer eines drahtlosen Netzwerks in einer technischen Anlage mit den in Anspruch 1 angegebenen Merkmalen gelöst. Vorteilhafte Ausgestaltungen und Weiterbildungen sind Gegenstand der Unteransprüche. Die Aufgabe wird auch durch eine technische Anlage mit den in Anspruch 10 angegebenen Merkmalen gelöst. Vorteilhafte Ausgestaltungen und Weiterbildungen sind Gegenstand der Unteransprüche.

Es wird ein Verfahren zur Datenübertragung zwischen einem ersten Teilnehmer und einem zweiten Teilnehmer eines drahtlosen Netzwerks, beispielsweise eines WLAN, in einer technischen Anlage vorgeschlagen. Bei der technischen Anlage handelt es sich insbesondere um eine industrielle Anwendung, beispielsweise ein Produktionswerk. Das drahtlose Netzwerk weist eine Mehrzahl von Teilnehmern auf, insbesondere mobile Systeme, beispielsweise autonom fahrende Fahrzeuge, sowie installierte Teilnehmer wie Gateways, Access-Points oder Base-Stations.

Erfindungsgemäß wird einzelnen Kommunikationsverbindungen zwischen jeweils zwei Teilnehmern des drahtlosen Netzwerks jeweils ein Kennwert zugewiesen. Besagter Kennwert beschreibt eine Wahrscheinlichkeit einer korrekten Datenübertragung über die jeweilige Kommunikationsverbindung. Je größer der Kennwert ist, umso höher ist dabei die Wahrscheinlichkeit einer korrekten Datenübertragung, und umso höher ist damit die Qualität der Datenübertragung über die Kommunikationsverbindung. In diesem Zusammenhang ist unter einer Kommunikationsverbindung zwischen zwei Teilnehmern eine direkte, unmittelbare Verbindung zwischen den beiden Teilnehmern ohne Zwischenschaltung eines weiteren Teilnehmers zu verstehen.

Ferner wird mehreren Kommunikationspfaden zwischen dem ersten Teilnehmer und dem zweiten Teilnehmer jeweils ein Kennwert zugewiesen. Besagter Kennwert beschreibt eine Wahrscheinlichkeit einer korrekten Datenübertragung über den jeweiligen Kommunikationspfad. Je größer der Kennwert ist, umso höher ist dabei die Wahrscheinlichkeit einer korrekten Datenübertragung, und umso höher ist damit die Qualität der Datenübertragung über den Kommunikationspfad. Ein Kommunikationspfad umfasst dabei jeweils mindestens eine direkte Kommunikationsverbindung zwischen jeweils zwei Teilnehmern des drahtlosen Netzwerks. Die mehrere Kommunikationspfade beschreiben dabei direkte Verbindungen über mehrere Kommunikationsschnittstellen. Insbesondere handelt es sich dabei um die Schnittstellen, die unterschiedliche Übertragungsmedien, Übertragungsfrequenzen, Modulationsarten und/oder Codierungen verwenden.

In Abhängigkeit von den Kennwerten, welche den Kommunikationspfaden zugewiesenen sind, wird mindestens ein Kommunikationspfad zur Datenübertragung zwischen dem ersten Teilnehmer und dem zweiten Teilnehmer ausgewählt, und es werden Daten zwischen dem ersten Teilnehmer und dem zweiten Teilnehmer über den mindestens einen ausgewählten Kommunikationspfad übertragen.

Bei dem erfindungsgemäßen Verfahren zur Datenübertragung zwischen einem ersten Teilnehmer und einem zweiten Teilnehmer eines drahtlosen Netzwerks ist die Qualität der Datenübertragung im Vergleich zu einem aus dem Stand der Technik bekannten Verfahren zur Datenübertragung signifikant verbessert. Wenn keine direkte Kommunikationsverbindung zwischen dem ersten Teilnehmer und dem zweiten Teilnehmer verfügbar ist, oder wenn die Qualität der Datenübertragung über die direkte Kommunikationsverbindung zwischen dem ersten Teilnehmer und dem zweiten Teilnehmer nicht zufriedenstellend ist, so ist ein Kommunikationspfad zur Datenübertragung auswählbar, bei welchem die Qualität der Datenübertragung zufriedenstellend ist, falls ein solcher Pfad existent ist. Durch die Zuweisung von Kennwerten an die Kommunikationsverbindungen sowie Kommunikationspfade, welche Wahrscheinlichkeiten von korrekten Datenübertragungen beschreiben, ist die Qualität der Datenübertragung dabei detaillierter und realitätsnäher abbildbar, als wenn lediglich die Existenz einer Kommunikationsverbindung zwischen dem ersten Teilnehmer und dem zweiten Teilnehmer binär angegeben wird.

Erfindungsgemäß wird eine Mehrzahl von Kommunikationspfaden zur Datenübertragung ausgewählt. Die ausgewählten Kommunikationspfade bilden dabei eine Kommunikationsgruppe. Dabei wird der Kommunikationsgruppe ein Kennwert zugewiesen, welcher eine Wahrscheinlichkeit einer korrekten Datenübertragung über die Kommunikationspfade der Kommunikationsgruppe beschreibt.

Erfindungsgemäß sind die Kommunikationspfade einer Kommunikationsgruppe parallel angeordnet. Die Kommunikationspfade der Kommunikationsgruppe sind somit redundant.

Erfindungsgemäß wird eine Mehrzahl von Kommunikationspfaden zur Datenübertragung ausgewählt, welche eine Kommunikationsgruppe bilden, wobei der Kennwert, welcher der Kommunikationsgruppe zugewiesen ist, einen vorgegebenen Grenzwert übersteigt.

Ein Kommunikationspfad zwischen dem ersten Teilnehmer und dem zweiten Teilnehmer umfasst beispielsweise genau eine direkte Kommunikationsverbindung zwischen dem ersten Teilnehmer und dem zweiten Teilnehmer. Es ist aber auch vorgesehen, dass mindestens ein Kommunikationspfad zwischen dem ersten Teilnehmer und dem zweiten Teilnehmer eine Mehrzahl von Kommunikationsverbindungen zwischen jeweils zwei Teilnehmern des drahtlosen Netzwerks umfasst. Dabei sind die Kommunikationsverbindungen seriell angeordnet. Beispielsweise umfasst ein Kommunikationspfad zwischen dem ersten Teilnehmer und dem zweiten Teilnehmer eine direkte Kommunikationsverbindung zwischen dem ersten Teilnehmer und einem weiteren Teilnehmer sowie ein eine direkte Kommunikationsverbindung zwischen dem weiteren Teilnehmer und dem zweiten Teilnehmer.

Gemäß einer bevorzugten Ausgestaltung der Erfindung liegt ein Kennwert, der einer Kommunikationsverbindung zwischen jeweils zwei Teilnehmern zugewiesen wird, in einem Bereich zwischen 0 und 1. Wenn der Kennwert gleich 1 ist, so ist die Datenübertragung über die Kommunikationsverbindung vollständig korrekt. Wenn der Kennwert gleich 0 ist, so ist die Datenübertragung über die Kommunikationsverbindung unmöglich. Ein Kennwert, der einem Kommunikationspfad zugewiesen wird, wird dabei als Produkt der Kennwerte der einzelnen seriell angeordneten Kommunikationsverbindungen des Kommunikationspfades berechnet. Der Kennwert, der einem Kommunikationspfad zugewiesen wird, liegt somit ebenfalls in einem Bereich zwischen 0 und 1.

Beispielsweise umfasst ein Kommunikationspfad eine erste Kommunikationsverbindung, welcher ein Kennwert P1 zugewiesen ist, und eine zweite Kommunikationsverbindung, welcher ein Kennwert P2 zugewiesen ist. Dem Kommunikationspfad wird dann ein Kennwert P zugewiesen, der folgendermaßen berechnet wird:

$$P = P1 * P2$$

Gemäß einer vorteilhaften Ausgestaltung der Erfindung wird ein Kommunikationspfad zwischen dem ersten Teilnehmer und dem zweiten Teilnehmer zur Datenübertragung ausgewählt, welchem der höchste Kennwert der den Kommunikationspfaden zugewiesenen Kennwerte zugewiesen ist. Insbesondere wird dabei genau ein Kommunikationspfad ausgewählt. Falls mehrere Kommunikationspfade mit gleichen Kennwerten vorhanden sind, so werden weitere Kriterien zur Auswahl herangezogen. Beispielsweise wird in diesem Fall derjenige Kommunikationspfad ausgewählt, welcher die geringste Anzahl von direkten Kommunikationsverbindungen aufweist.

Gemäß einer anderen vorteilhaften Ausgestaltung der Erfindung wird ein Kommunikationspfad zwischen dem ersten Teilnehmer und dem zweiten Teilnehmer zur Datenübertragung ausgewählt, dessen Kennwert einen vorgegebenen Grenzwert übersteigt. Insbesondere wird dabei genau ein Kommunikationspfad ausgewählt. Falls mehrere Kommunikationspfade vorhanden sind, deren Kennwerte den Grenzwert übersteigen, so werden weitere Kriterien zur Auswahl herangezogen. Beispielsweise wird in diesem Fall derjenige Kommunikationspfad ausgewählt, welchem der höchste Kennwert zugewiesen ist, oder welcher die geringste Anzahl von direkten Kommunikationsverbindungen aufweist.

Gemäß einer vorteilhaften Ausgestaltung der Erfindung wird die Anzahl der benötigten redundanten Kommunikationspfade für eine durch ein Datenpacket oder eine Applikation vorgegebene Übertragungswahrscheinlichkeit berechnet, welcher der besagte Grenzwert entspricht.

Gemäß einer vorteilhaften Ausgestaltung der Erfindung liegt ein Kennwert, der einem Kommunikationspfad zugewiesen wird, in einem Bereich zwischen 0 und 1. Wenn der Kennwert gleich 1 ist, so ist die Datenübertragung über den Kommunikationspfad vollständig korrekt. Wenn der Kennwert gleich 0 ist, so ist die Datenübertragung über den Kommunikationspfad unmöglich. Ein Kennwert, der einer Kommunikationsgruppe zugewiesen wird, wird dabei als Komplement eines Produkts der komplementären Kennwerte der einzelnen Kommunikationspfade der Kommunikationsgruppe berechnet. Als Komplement wird vorliegend die Differenz zu 1 bezeichnet. Der Kennwert, der einer Kommunikationsgruppe zugewiesen wird, liegt somit ebenfalls in einem Bereich zwischen 0 und 1.

Beispielsweise umfasst eine Kommunikationsgruppe einen ersten Kommunikationspfad, welchem ein Kennwert P1 zugewiesen ist, und einen zweiten parallelen Kommunikationspfad, welchem ein Kennwert P2 zugewiesen ist. Der Kommunikationsgruppe wird dann ein Kennwert P zugewiesen, der folgendermaßen berechnet wird:

$$P = 1 - (1 - P1) * (1 - P2)$$

Gemäß einer vorteilhaften Ausgestaltung der Erfindung werden die Zuweisung der Kennwerte zu den Kommunikationspfaden zwischen dem ersten Teilnehmer und dem zweiten Teilnehmer und/oder die Auswahl des mindestens einen Kommunikationspfades zur Datenübertragung von dem ersten Teilnehmer durchgeführt. Die Zuweisung der Kennwerte sowie die Auswahl des Kommunikationspfades finden also dezentral statt. Bevorzugt weist jeder Teilnehmer des drahtlosen Netzwerks den Kommunikationspfaden von dem jeweiligen Teilnehmer zu anderen Teilnehmern, vorzugsweise zu allen anderen Teilnehmern, jeweils einen Kennwert zu. Bei Bedarf wählt der jeweilige Teilnehmer dann einen Kommunikationspfad zu einem anderen Teilnehmer aus.

Gemäß einer anderen vorteilhaften Ausgestaltung der Erfindung werden die Zuweisung der Kennwerte zu den Kommunikationspfaden zwischen dem ersten Teilnehmer und dem zweiten Teilnehmer und/oder die Auswahl des mindestens einen Kommunikationspfades zur Datenübertragung von einem zentralen Rechner durchgeführt. Die Zuweisung der Kennwerte sowie die Auswahl des Kommunikationspfades finden also zentral statt. Bevorzugt weist der zentrale Rechner den Kommunikationspfaden von allen Teilnehmer des drahtlosen Netzwerks zu anderen Teilnehmern, vorzugsweise zu allen anderen Teilnehmern, jeweils einen Kennwert zu. Bei Bedarf wählt der zentrale Rechner dann einen Kommunikationspfad von einem Teilnehmer zu einem anderen Teilnehmer aus.

Eine erfindungsgemäße Technische Anlage umfasst ein drahtloses Netzwerk, welches eine Mehrzahl von Teilnehmern aufweist. Dabei ist die technische Anlage zur Ausführung des erfindungsgemäßen Verfahrens eingerichtet.

Gemäß einer vorteilhaften Ausgestaltung der Erfindung ist mindestens einer der Teilnehmer als mobiles System, insbesondere als autonom fahrendes Fahrzeug, ausgebildet.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe. Der Umfang der Erfindung ist durch die Ansprüche definiert.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:

Figur 1: eine schematische Darstellung einer technischen Anlage,

Figur 2: eine schematische Darstellung einer Kommunikationsverbindung,

Figur 3: eine schematische Darstellung eines Kommunikationspfades,

Figur 4: eine schematische Darstellung einer Kommunikationsgruppe,

Figur 5: ein Flussdiagramm mit Schritten eines Verfahrens zur Datenübertragung,

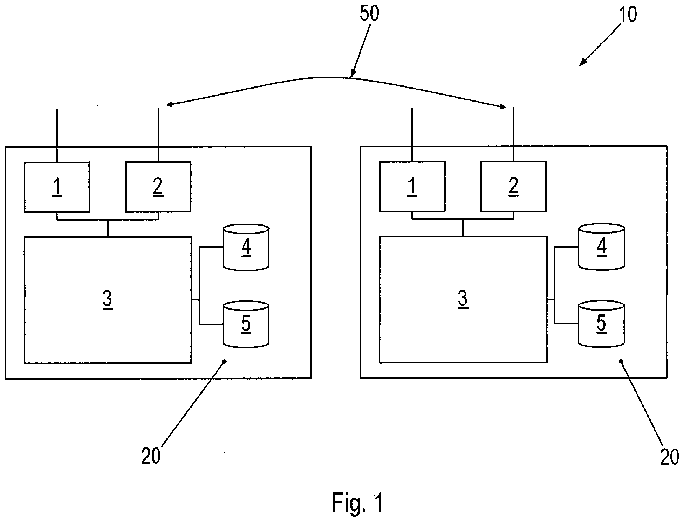

Figur 1 zeigt eine schematische Darstellung einer technischen Anlage 10. Bei der technischen Anlage 1 handelt es sich vorliegend um eine industrielle Anwendung, beispielsweise ein Produktionswerk. Die technische Anlage 10 weist ein drahtloses Netzwerk auf, beispielsweise ein WLAN. Das drahtlose Netzwerk umfasst eine Mehrzahl von Teilnehmern 20, insbesondere mobile Systeme, beispielsweise autonom fahrende Fahrzeuge, sowie installierte Teilnehmer wie Gateways, Access-Points oder Base-Stations. Über das drahtlose Netzwerk ist ein Datenaustausch zwischen den Teilnehmern 20 möglich.

Die hier gezeigten Teilnehmer 20 weisen jeweils eine erste drahtlose Kommunikationsschnittstelle 1 und eine zweite drahtlose Kommunikationsschnittstelle 2 auf. Bei den Kommunikationsschnittstellen 1, 2 handelt es sich beispielsweise um WiFi-, Bluetooth-, ZigBee-, Licht- oder Radar- Schnittstellen. Vorliegend besteht eine Kommunikationsverbindung 50 zwischen den zweiten drahtlosen Kommunikationsschnittstellen 2 der Teilnehmer 20. Die Kommunikationsschnittstellen 1, 2 sind nicht zwingend miteinander kompatibel. Beispielsweise ist eine drahtlose Kommunikation zwischen einer ersten drahtlosen Kommunikationsschnittstelle 1 und einer zweiten drahtlosen Kommunikationsschnittstelle 2 nicht möglich.

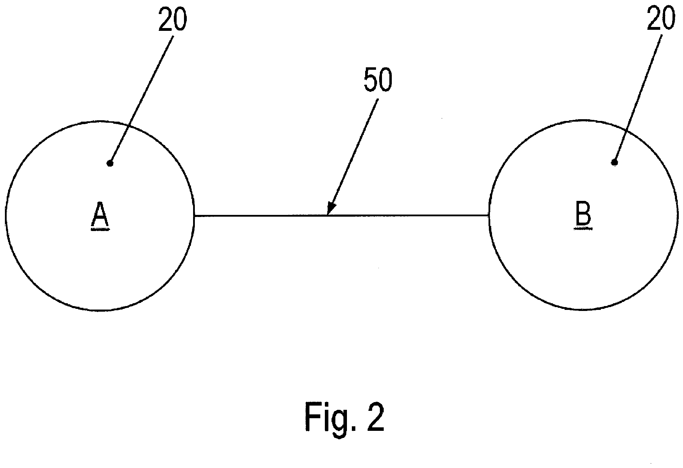

Figur 2 zeigt beispielhaft eine schematische Darstellung einer Kommunikationsverbindung 50 zwischen einem ersten Teilnehmer 20, welcher mit "A" bezeichnet wird, und einem zweiten Teilnehmer 20, welcher mit "B" bezeichnet wird. Bei der Kommunikationsverbindung 50 handelt es sich um eine direkte, unmittelbare Verbindung zwischen den beiden Teilnehmern 20 ohne Zwischenschaltung eines weiteren Teilnehmers 20.

Der Kommunikationsverbindung 50 ist ein Kennwert zugewiesen, welcher eine Wahrscheinlichkeit einer korrekten Datenübertragung über die Kommunikationsverbindung 50 beschreibt. Der Kennwert, der hier mit "PAB" bezeichnet wird, liegt in einem Bereich zwischen 0 und 1.

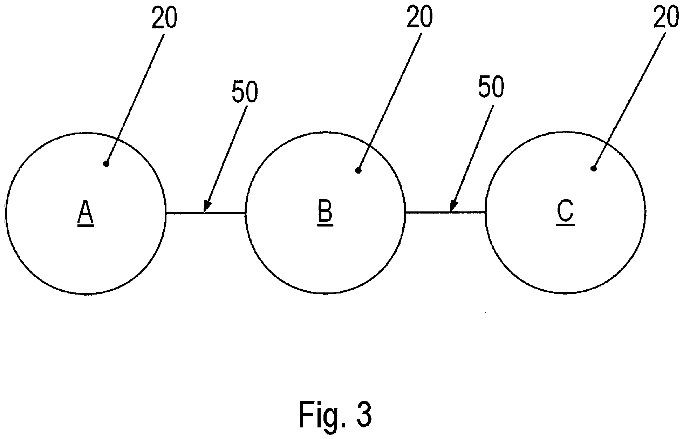

Figur 3 zeigt beispielhaft eine schematische Darstellung eines Kommunikationspfades zwischen einem ersten Teilnehmer 20, welcher mit "A" bezeichnet wird, und einem zweiten Teilnehmer 20, welcher mit "C" bezeichnet wird.

Der Kommunikationspfad umfasst eine Kommunikationsverbindung 50 zwischen dem mit "A" bezeichneten ersten Teilnehmer 20 und einem mit "B" bezeichneten weiteren Teilnehmer 20, welcher ein mit "PAB" bezeichneter Kennwert zugewiesen ist. Der Kommunikationspfad umfasst zusätzlich eine Kommunikationsverbindung 50 zwischen dem mit "B" bezeichneten weiteren Teilnehmer 20 und dem mit "C" bezeichneten zweiten Teilnehmer 20, welcher ein mit "PBC" bezeichneter Kennwert zugewiesen ist. Die Kommunikationsverbindungen 50 sind dabei seriell angeordnet. Dem Kommunikationspfad wird ein Kennwert "PAC" zugewiesen, der als Produkt der Kennwerte der einzelnen Kommunikationsverbindungen 50 folgendermaßen berechnet wird:

$$PAC \quad = \quad PAB * PBC$$

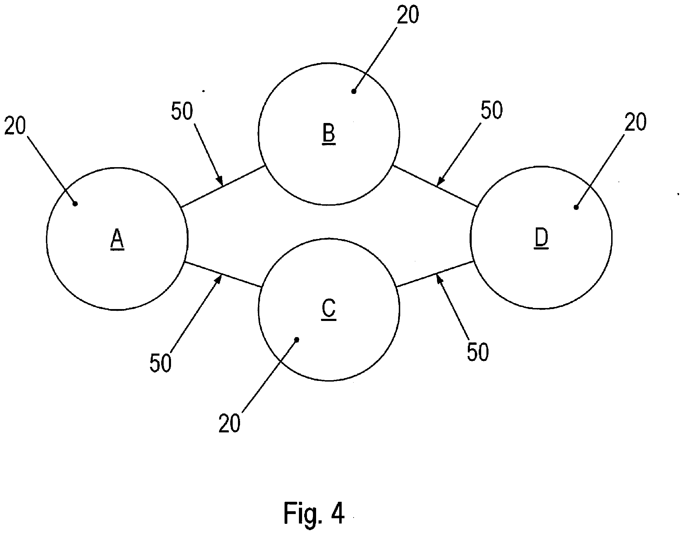

Figur 4 zeigt beispielhaft eine schematische Darstellung einer Kommunikationsgruppe zwischen einem ersten Teilnehmer 20, welcher mit "A" bezeichnet wird, und einem zweiten Teilnehmer 20, welcher mit "D" bezeichnet wird. Die Kommunikationsgruppe umfasst vorliegend zwei parallele Kommunikationspfade, welche somit redundant sind.

Der eine Kommunikationspfad umfasst eine Kommunikationsverbindung 50 zwischen dem mit "A" bezeichneten ersten Teilnehmer 20 und einem mit "B" bezeichneten weiteren Teilnehmer 20, welcher ein mit "PAB" bezeichneter Kennwert zugewiesen ist. Der eine Kommunikationspfad umfasst zusätzlich eine Kommunikationsverbindung 50 zwischen dem mit "B" bezeichneten weiteren Teilnehmer 20 und dem mit "D" bezeichneten zweiten Teilnehmer 20, welcher ein mit "PBD" bezeichneter Kennwert zugewiesen ist. Die Kommunikationsverbindungen 50 sind dabei seriell angeordnet.

Der andere Kommunikationspfad umfasst eine Kommunikationsverbindung 50 zwischen dem mit "A" bezeichneten ersten Teilnehmer 20 und einem mit "C" bezeichneten weiteren Teilnehmer 20, welcher ein mit "PAC" bezeichneter Kennwert zugewiesen ist. Der andere Kommunikationspfad umfasst zusätzlich eine Kommunikationsverbindung 50 zwischen dem mit "C" bezeichneten weiteren Teilnehmer 20 und dem mit "D" bezeichneten zweiten Teilnehmer 20, welcher ein mit "PCD" bezeichneter Kennwert zugewiesen ist. Die Kommunikationsverbindungen 50 sind dabei seriell angeordnet.

Der Kommunikationsgruppe wird ein Kennwert "PAD" zugewiesen, der als Komplement eines Produkts der komplementären Kennwerte der einzelnen Kommunikationspfade folgendermaßen berechnet wird:

$$PAD = 1 - (1 - PAB * PBD) * (1 - PAC * PCD)$$

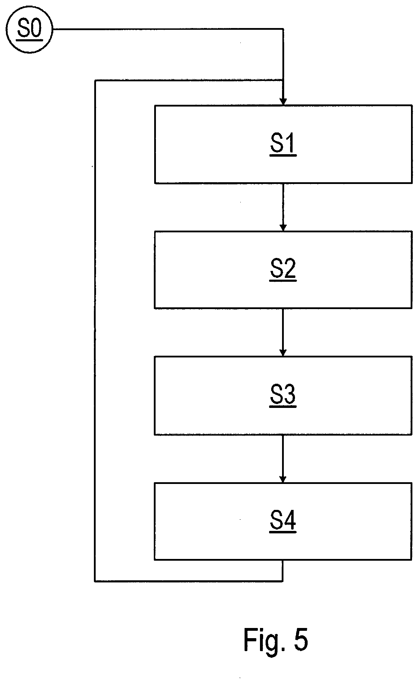

Figur 5 zeigt ein Flussdiagramm mit Schritten eines Verfahrens zur Datenübertragung. Das Verfahren beginnt mit einem Startschritt S0.

In einem Schritt S1 erfasst jeder Teilnehmer 20 des drahtlosen Netzwerks Informationen über Kommunikationsverbindung 50 zu benachbarten, direkt erreichbaren Teilnehmern 20 während des Betriebs des drahtlosen Netzwerks. Diese Informationen werden beispielsweise in Form einer Paketfehlerrate oder einer komplementären Paketfehlerrate erfasst. Es ist dabei denkbar, Ersatz-Traffic zu generieren, wenn keine Kommunikation über die drahtlosen Kommunikationsschnittstellen 1, 2 der Teilnehmer 20 stattfindet. Der besagte Ersatz-Traffic besteht dabei insbesondere aus Beacons oder Hello-Nachrichten verschiedener Netzwerkprotokolle.

Die Paketfehlerrate wird über einen definierten Zeitraum als Verhältnis von in diesem Zeitraum nicht empfangenen Nachrichten und einer Gesamtzahl an erwarteten Nachrichten bestimmt. Der Zeitraum erstreckt sich typischerweise in einer Größenordnung von 1 s bis 100 s. Der Zeitraum wird in sehr mobilen Netzwerken, wenn sich die Teilnehmer verhältnismäßig schnell und häufig bewegen, kleiner gewählt, und in statischen Anwendungen mit im Wesentlichen statischen Teilnehmer 20 wird der Zeitraum größer gewählt. Ein kleiner Zeitraum erlaubt eine schnelle Aktualisierung der Informationen. Ein großer Zeitraum erlaubt eine hohe Auflösung in der Paketfehlerrate. Bei den Nachrichten, bei denen zeitkritische Informationen übertragen werden, bei denen eine maximale Latenzzeit vorgegeben ist, wird die Kommunikationsqualität in einem Zeitraum berechnet, dessen Dauer dieser Latenzzeit oder einem Teil der Latenzzeit entspricht.

In einem Schritt S2 tauscht jeder Teilnehmer 20 des drahtlosen Netzwerks Informationen über die Qualität aller Kommunikationsverbindungen 50 mit direkt erreichbaren Teilnehmern 20 aus. Die Qualität einer Kommunikationsverbindung 50 ist definiert durch eine Wahrscheinlichkeit, mit welcher ein Datenpaket über diese Kommunikationsverbindung 50 übertragen werden kann. Die Wahrscheinlichkeit wird dabei als Komplement der zuvor erfassten Paketfehlerrate berechnet. Dabei wird jeder Kommunikationsverbindung 50 ein Kennwert zugewiesen, welcher die besagte Wahrscheinlichkeit beschreibt, und welcher in einem Bereich zwischen 0 und 1 liegt. Nicht vorhandenen Kommunikationsverbindungen 50 zwischen zwei Teilnehmern 20 wird der Kennwert 0 zugewiesen.

Die von direkt erreichbaren Teilnehmern 20 des drahtlosen Netzwerks empfangenen Information über die Qualität der Kommunikationsverbindungen 50 werden zusammengefasst zu Netzwerkverbindungsinformationen über direkte Verbindungsqualitäten. Die Sammlung und Zusammenfassung zu Netzwerkverbindungsinformationen kann dezentral oder zentral erfolgen. Bei einer dezentralen Zusammenfassung ist ein Single-Point-of-Failure ausgeschlossen, was zu einer höheren Robustheit des Gesamtsystems führt. Bei einer zentralen Zusammenfassung sind wegen mehr verfügbaren Speicherressourcen die Informationen vollständig speicherbar, auch für große drahtlose Netzwerke mit einer Vielzahl an Teilnehmern 20.

In einem Schritt S3 wird die Qualität für indirekte Verbindungen innerhalb des Netzwerks aus den Netzwerkverbindungsinformationen berechnet. Diese Berechnungen berücksichtigen dabei die Übertragungswahrscheinlichkeiten über angereihte und parallele Verbindungen. Einem Kommunikationspfad, der eine Mehrzahl von seriell angeordneten Kommunikationsverbindungen 50 umfasst, wird beispielsweise ein Kennwert zugewiesen, der als Produkt der Kennwerte der einzelnen seriell angeordneten Kommunikationsverbindungen 50 berechnet wird. Einer Kommunikationsgruppe, die eine Mehrzahl von parallel angeordneten Kommunikationspfaden umfasst, wird beispielsweise ein Kennwert zugewiesen, der als Komplement eines Produkts der komplementären Kennwerte der einzelnen Kommunikationspfade der Kommunikationsgruppe berechnet wird. Das Berechnungsverfahren kann Schleifen innerhalb der Kommunikationspfade ausschließen und führt so zu einer effizienteren Kommunikation.

In einem Schritt S4 erfolgt eine Bewertung von möglichen Routen von einzelnen Teilnehmern 20 zu anderen Teilnehmern 20 des drahtlosen Netzwerks auf Basis der vorhandenen Netzwerkverbindungsinformationen. Dabei wird mindestens ein Kommunikationspfad zur Datenübertragung zwischen einem ersten Teilnehmer 20 und einem zweiten Teilnehmer 20 in Abhängigkeit von den Kennwerten ausgewählt, welche den Kommunikationspfaden und Kommunikationsgruppen zugewiesenen sind.

In einer ersten möglichen Ausführung wird der Kommunikationspfad zur Datenübertragung zwischen dem ersten Teilnehmer 20 und dem zweiten Teilnehmer 20 ausgewählt, dem der höchste Kennwert zugewiesen ist. Es wird also der zuverlässigste Kommunikationspfad von dem ersten Teilnehmer 20 zu dem zweiten Teilnehmer 20 ausgewählt, welcher die höchste Übertragungswahrscheinlichkeit aufweist. Haben zwei Kommunikationspfade identische Übertragungswahrscheinlichkeiten, so wird der kürzere Kommunikationspfad ausgewählt. Die Länge eines Kommunikationspfades wird durch die Anzahl der seriellen Kommunikationsverbindungen 50 des Kommunikationspfades definiert. Haben zwei Kommunikationspfade identische Übertragungswahrscheinlichkeiten und identische Längen, so wird derjenige Kommunikationspfad ausgewählt, die zuerst entdeckt wurde.

In einer zweiten möglichen Ausführung wird eine Kommunikationsgruppe zur Datenübertragung zwischen dem ersten Teilnehmer 20 und dem zweiten Teilnehmer 20 ausgewählt, welche eine Mehrzahl von parallelen Kommunikationspfaden umfasst. Dabei übersteigt der Kennwert, welcher der Kommunikationsgruppe zugewiesen ist, einen vorgegebenen Grenzwert. Beispielsweise wird die Anzahl der benötigten redundanten Kommunikationspfade für eine durch ein Datenpaket oder eine Applikation vorgegebene Übertragungswahrscheinlichkeit berechnet, welcher der besagte Grenzwert entspricht. Aus der Auswahl einer Kommunikationsgruppe mit mehreren redundanten Kommunikationspfaden ergeben sich mehrere Vorteile. Besonders für zeitkritische Pakete wird die Übertragungssicherheit durch redundante Kommunikationspfade statt durch Wiederholung der Nachricht erreicht. Die Länge der verfügbaren Kommunikationspfade kann begrenzt werden, wenn die Latenz-Anforderung an die Übertragung eines Datenpaketes dies verlangt. Durch die Nutzung redundanter Teilpfade ist die Übertragungswahrscheinlichkeit erhöht, auch wenn das Ziel des Kommunikationspfades nicht vollständig redundant angebunden ist.

Das gesamte drahtlose Netzwerk ist bewertbar, während nur Informationen für direkte Kommunikationsverbindungen 50 aufgezeichnet werden. Dieser verringerte Bedarf an Netzwerküberwachung verringert Interferenzen mit primärer Kommunikation. Auch komplexe Multi-Hop Routen sind ohne vollständigen Netzwerk-Scan auswählbar. Dies verringert die Latenz zur Übertragung im Netzwerk bei gleichzeitig geringem Overhead. Die Beschreibungen von Kommunikationspfaden für gesendete Pakete wird durch das Distanz-Vektor Verfahren realisiert, wobei das oben beschriebene Verfahren das Distanz-Vektor-Verfahren optimiert, da einzelne Teilnehmer 20 in der Lage sind, auf topologische Änderungen jenseits ihrer direkten Nachbarschaft zu reagieren, und verfügbare Netzwerkinformationen bei gleicher Netzwerklast öfter austauschbar sind. Bei dem Distanz-Vektor Verfahren beinhaltet ein gesendetes Paket lediglich das endgültige Ziel, jedoch keine Informationen über die zu verwendende Route. Jeder Teilnehmer 20, der das Paket weiterleiten soll, verwendet dabei die ihm bekannten Netzwerkinformationen zur Bestimmung der besten Route. Dieses Verfahren wird hier verwendet, da es möglich und wahrscheinlich ist, dass topologische Informationen über weit entfernte Netzwerkteile bei einem sendenden Teilnehmer 20 veraltet sind. Die Route eines Paketes mit zunehmender Nähe zum Empfänger aktualisieren zu können verbessert dabei die Wahrscheinlichkeit für eine erfolgreiche Übertragung.

Die dezentrale Verfügbarkeit und Analyse von Verbindungsinformationen erhöht die Robustheit des Gesamtsystems. Inkompatible Kommunikationsstandards können mathematisch zu einem Gesamtnetzwerk kombiniert werden und erlauben eine schnittstellenübergreifende Bewertung des drahtlosen Netzwerks. Die inkompatiblen, redundanten Kommunikationsstandards zwischen zwei Kommunikationsstandards werden dabei als parallele Kommunikationspfade betrachtet. Die Verbindungsqualität wird relativ einfach modelliert durch das Verhältnis der Anzahl der empfangenen und der gesendeten, beziehungsweise der erwarteten Nachrichten, unabhängig davon, warum eine Nachricht nicht empfangen wurde. Mögliche Ursachen dafür sind beispielsweise Interferenzen durch gleichartige Systeme, Rauschen oder Fading des Signals.

Bei dem Verfahren handelt es sich um ein Vorgehen zur Wahl von Routen, insbesondere von Kommunikationspfaden, für Nachrichten durch komplexe Multi-Hop Netzwerke. Das Verfahren ist in der Lage, die Zuverlässigkeit von Netzwerken auf Basis stochastischer Daten für lokale Kommunikationsverbindungen 50, also Kommunikationsverbindungen 50 mit direkter topologischer Nachbarschaft der Teilnehmer 20, und für globale Verbindungen, also Verbindungen über Kommunikationspfade zu indirekt erreichbaren Teilnehmer 20, zu berechnen. Auf Basis der berechneten Zuverlässigkeiten ist der zuverlässigste Kommunikationspfad auswählbar. Das System ist in der Lage, sowohl die Wahrscheinlichkeit für eine erfolgreiche Übertragung zwischen einem Sender und einem Empfänger zu berechnen, als auch den zuverlässigsten Kommunikationspfad zwischen diesen zu bestimmen.

Jeder Teilnehmer 20 führt die nachfolgend genannten Operationen aus um Informationen innerhalb des drahtlosen Netzwerks zu verteilen. Zunächst wird das Gesamtnetzwerk direkt und indirekt auf Basis der verfügbaren Informationen im Schritt S1 erfasst. Im Schritt S2 werden die Informationen ausgetauscht. Im Schritt S3 werden die Informationen bewertet. Anschließend werden im Schritt S4 die zuverlässigsten Routen zu allen anderen Teilnehmern 20 gesucht. Auf Basis dieser gefundenen Routen und den Informationen über das Gesamtnetzwerk werden Nachrichten in das Netzwerk gesendet und aus dem Netzwerk empfangen. Wenn globale Netzwerkinformationen empfangen wurden, so werden diese als Aktualisierung aufgenommen. Auf Basis der gesendeten und empfangenen Daten können außerdem lokale Informationen aktualisiert werden. Die Bewertung wird anschließend auf Basis dieser aktualisierten Informationen wiederholt.

Bei dem Verfahren zur Bewertung des Gesamtnetzwerks wird beispielhaft ein Netzwerk mit n Teilnehmern 20 in Form einer Verbindungsmatrix der Dimension n*n dargestellt. Diese Verbindungsmatrix enthält Kennwerte, welche die Wahrscheinlichkeiten für eine erfolgreiche direkte Datenübertragung zwischen allen möglichen Kommunikationsverbindungen 50 beschreiben. Diese Kennwerte liegen im Bereich zwischen 0 (inklusive) und 1 (inklusive). Ein Kennwert "0" signalisiert die Unmöglichkeit einer direkten Übertragung, ein Kennwert "1" bedeutet eine garantierte fehlerfreie Übertragung. Das Modell ist in der Lage, parallele Netzwerke, die unterschiedliche Kommunikationsmethoden verwenden, zu überlagern und die Übertragungswahrscheinlichkeit über indirekte Verbindungen zu berechnen. Indirekte Verbindungen bedeuten, dass Nachrichten durch Teilnehmer 20 im Netzwerk über Kommunikationspfade weitergeleitet werden. Dabei ist das Modell in der Lage, das Netzwerk schleifenfrei zu betrachten. Das bedeutet, dass eine Nachricht, nachdem sie beispielsweise über eine Verbindung A-B übertragen wurde, weder über die Verbindung A-B, noch über die Verbindung B-A erneut übertragen wird.

Das vorgestellte System ist in der Lage, redundante Kommunikationspfade zu erkennen und zu nutzen. Kommunikationspfade können dabei auf unterschiedliche Weise redundant sein. Ein nicht-redundanter Kommunikationspfad bedeutet, dass es nur genau eine Verbindung zwischen einem Sender und einem Empfänger gibt. Ein Kommunikationspfad kann außerdem teil-redundant oder voll-redundant sein. Teil-redundant bedeutet, dass Teile des Kommunikationspfades zwischen Sender und Empfänger über parallele Kommunikationspfade abbildbar sind. Im Weiteren wird nicht unterschieden ob ein Teil eines Kommunikationspfades einfach redundant ist oder mehrfach redundant ist. Redundanz kann durch dieses System sowohl durch das Senden über andere Teilnehmer 20, als auch über die Verwendung anderer Kommunikationsmethoden ausgedrückt werden. Schließlich gibt es noch voll-redundante Kommunikationspfade, bei denen vollständige Alternativrouten zwischen Sender und Empfänger bestehen. Vollständige Redundanz würde sich vor Allem dadurch ausdrücken, dass es auf mindestens zwei vollständig redundanten Kommunikationspfaden keine gemeinsamen Teilnehmer 20 gibt.

Wie im Schritt S4 des Vorgehens erläutert, sind zwei unterschiedliche Ausführung zur Wahl einer Route denkbar. Die erste Ausführung wird dabei angewendet, wenn keine Zielübertragungswahrscheinlichkeit durch die Applikation gegeben ist. Hier wird dann eine möglichst hohe Übertragungswahrscheinlichkeit angestrebt, wobei die aktuelle Netzwerkauslastung bei der Belegung redundanter Routen miteinbezogen wird. Wenn eine ZielÜbertragungswahrscheinlichkeit durch die Applikation vorgegeben ist, so ist die Anzahl der genutzten redundanten Kommunikationspfade begrenzbar, beispielsweise auf die 3 zuverlässigsten Kommunikationspfade.

Viele Netzwerkprotokolle beinhalten sogenannte Hello- oder Beacon-Nachrichten, die durch das hier beschriebene Verfahren vorteilhaft verwendbar sind. Dies sind Nachrichten, die in regelmäßigen Abständen durch jeden Teilnehmer des Netzwerks gesendet werden. Sie werden als Broadcasts gesendet und von jedem anderen Teilnehmer empfangen, der sich in der Reichweite des Senders befindet. In kabellosen Netzwerken ist diese Reichweite meist ein Abstand, welcher auch durch die Existenz signaldämpfender Hindernisse bedingt ist. Ein Teilnehmer beobachtet, wie oft er die Hello-Nachrichten oder Beacons anderer Teilnehmer empfängt. Weiterhin wird davon ausgegangen, dass jeder Teilnehmer weiß, welche anderen Teilnehmer sich in dem drahtlosen Netzwerk befinden. Diese Information ist beispielsweise durch die Programmierung oder lokale Konfiguration der Teilnehmer bekannt oder wird vor Inbetriebnahme bei einem übergeordneten System angefragt. Das nachträgliche Einfügen von Teilnehmern in ein Netzwerk ist möglich.

Wenn der Teilnehmer p für einen bestimmten Zeitraum das Netzwerk beobachtet hat, hat er in dieser Zeit eine Anzahl $N_n$ von einer möglichen Anzahl $M_n$ Beacons eines Teilnehmers n empfangen. Für diese direkten Kommunikationsverbindungen 50 ergibt sich dann eine Zuverlässigkeit von:

$$R^1_{pn} = \frac{N_n}{M_n}$$

Dabei gilt: $R^1_{pp} = 1$. Kombiniert mit den Informationen über empfangene Pakete aller anderen Teilnehmer ergibt sich mit $i + 1$ Teilnehmern im Netzwerk ein Verbindungsvektor:

$$R^1_p = \begin{pmatrix} R^1_{p0} & \cdots & R^1_{pi} \end{pmatrix}$$

Dies wird im Weiteren als lokale Netzwerkinformationen bezeichnet. Diese Informationen werden anschließend von den Teilnehmern in das Netzwerk zu den anderen Teilnehmern gesendet. So können Teilnehmer Informationen über indirekte Verbindungen erhalten.

Verbindungsinformationen zu Teilnehmern, von denen keine Nachrichten empfangen wurden, für die also gilt $R^1_{pn} = 0$, werden in einer vorteilhaften Ausführung nicht mitgesendet, dies spart Netzwerkressourcen. Abhängig von der Art des verwendeten Netzwerks, der Netzwerkauslastung und der Konfiguration des hier beschriebenen Systems werden diese Informationen auf unterschiedliche Weise in dem Netzwerk verteilt.

In einer vorteilhaften Ausführung werden die Wahrscheinlichkeiten in einer Matrix eingetragen. Dabei werden die Adressen bekannter Teilnehmer den Indizes der Matrix zugeordnet. Der Vorteil dieser Ausführung als Berechnung mittels Matrix ist, dass diese in einem Rechnersystem sehr effizient implementierbar ist.

Wenn ein Teilnehmer nun diese lokalen Informationen anderer Teilnehmer empfängt, so kann er diese zu seinen eigenen lokalen Informationen hinzufügen:

$$R^1 = \begin{pmatrix} R_0^1 \\ \vdots \\ R_i^1 \end{pmatrix} = \begin{pmatrix} R_{00}^1 & \cdots & R_{0i}^1 \\ \vdots & \ddots & \vdots \\ R_{i0}^1 & \cdots & R_{ii}^1 \end{pmatrix}$$

Dies sind die globalen Verbindungsinformationen für direkte Kommunikationsverbindungen. Der jeweilige Teilnehmer aktualisiert dabei eine Zeile, wenn neue Informationen vorliegen. Bei $R^1$ handelt es sich um eine quadratische Matrix, da für jede Verbindung A-B, die in der Matrix hinterlegt ist, auch eine Verbindung B-A hinterlegt sein muss. $R^1$ muss keine symmetrische Matrix sein Für die Bestimmung von Multi-Hop-Routen in dem Netzwerk wird $R^1$ weiter verarbeitet.

Zunächst erfolgt eine Übernahme der Inhalte von $R^j$ (anfangs = $R^1$) nach dR, einer Variante von R, die im weiteren Verlauf verändert wird. j ist dabei die maximale Anzahl der Kommunikationsverbindungen, für deren Tiefe das Netzwerk aktuell untersucht wird. Die Tiefe des Netzwerks bezeichnet dabei die maximal mögliche Anzahl an Weiterleitungen auf einer Route. Es wird untersucht, wie sich die Verbindung von Teilnehmer *i* für d Kommunikationsverbindungen entwickelt. Dieses Verfahren kann anschließend für weitere Kommunikationsverbindungen wiederholt werden, sowie für die verbleibenden Teilnehmer.

Mit

$$dR = dR \circ K_S(I)$$

und

$$K_S(A) = \begin{pmatrix} 1 & \cdots & 1 \\ \vdots & \ddots & \vdots \\ 1 & \cdots & 1 \end{pmatrix} - \begin{pmatrix} a_{11} & \cdots & a_{1n} \\ \vdots & \ddots & \vdots \\ a_{m1} & \cdots & a_{mn} \end{pmatrix}$$

Dabei ist $\circ$ ein Operator für die elementweise Multiplikation. *I* definiert die Einheitsmatrix einer bestimmten Größe, in dem vorliegenden Fall die Einheitsmatrix der Größe (i+1):

$$I = \begin{bmatrix} 1 & \cdots & 0 \\ \vdots & \ddots & \vdots \\ 0 & \cdots & 1 \end{bmatrix}$$

Durch diesen Schritt werden zunächst, für die weitere Berechnungsschritte, die Verbindungen von Knoten zu sich selbst aus der Matrix entfernt, beziehungsweise auf null gesetzt. Wobei $K_S(A)$ das elementweise stochastische Komplement der Wahrscheinlichkeiten in der Matrix *A* ist. Die Informationen der Verbindungen des Teilnehmers *i* werden als Vektor $c_i$ gespeichert, während die Informationen aus der Matrix entfernt werden indem die Spalte i aus dR auf 0 gesetzt wird. Folgender Ablauf wird für jede Kommunikationsverbindung d, für die das Netzwerk untersucht werden soll, durchgeführt:

Es wird $c_i$ zu einer quadratischen Matrix vergrößert mittels $C_i = B(c_i)$. Wobei:

$$C_i = B(c_i) = \begin{pmatrix} C_{i11} = c_1 & \cdots & C_{i1n} = c_1 \\ \vdots & \ddots & \vdots \\ C_{in1} = c_n & \cdots & C_{inn} = c_n \end{pmatrix}$$

Durch eine elementweise Multiplikation werden die Wahrscheinlichkeiten zweier aufeinanderfolgender Kommunikationsverbindung verknüpft: $D_i = dR \circ C_i$. Das stochastische Komplement dieser Matrix wird anschließend in Reihenrichtung multiplikativ kollabiert um die Verbindungswahrscheinlichkeiten des betrachteten Knotens zu erhalten: $D_i = \overrightarrow{\Pi\ K_S(D_i)}$ ; mit:

$$\overrightarrow{\prod A} = \begin{pmatrix} \prod\limits_{j=1}^{n} a_{1j} \\ \vdots \\ \prod\limits_{j=1}^{n} a_{mj} \end{pmatrix}$$

Das Ergebnis wird anschließend mit dem Komplement der zuvor berechneten Verbindungswahrscheinlichkeiten $c_l$ kombiniert $C_b = [K_S(c_l), D_j]$ und anschließend wiederrum multiplikativ in Reihenrichtung kollabiert und die komplementäre Wahrscheinlichkeit berechnet: $C_b = K_S\left(\overrightarrow{\Pi C_b}\right)$

Die Kombination, beziehungsweise die Verbindung, zweiter Vektoren/Matrizen wird wie folgt errechnet:

$$[\vec{a}, \vec{b}] = \begin{pmatrix} a_1 & b_1 \\ \vdots & \vdots \\ a_n & b_n \end{pmatrix} \qquad {}^i[\vec{a}, B] = \begin{pmatrix} b_{11} & \cdots & b_{1i} = a_1 & \cdots & b_{1N} \\ \vdots & \ddots & \vdots & \ddots & \vdots \\ b_{n1} & \cdots & b_{ni} = a_n & \cdots & b_{nN} \\ \vdots & \ddots & \vdots & \ddots & \vdots \\ b_{N1} & \cdots & b_{Ni} = a_N & \cdots & b_{NN} \end{pmatrix}$$

Nach all diesen Operationen wird aus $dR$ jede Kommunikationsverbindung entfernt, die in diesem Fall zur Übertragung bereits genutzt wurde. Dieses Entfernen bereits einbezogener Kommunikationsverbindungen hält das betrachtete Netzwerk schleifenfrei und die berechneten Wahrscheinlichkeiten korrekt. Eine Schleife in einem Netzwerk würde immer bedeuten, dass eine Kommunikationsverbindung in mindestens einer Richtung doppelt betrachtet wurde. Durch das Entfernen von Kommunikationsverbindung, deren Übertragungswahrscheinlichkeiten bereits in die Erreichbarkeitswahrscheinlichkeit eines Knotens mit einbezogen wurden, wird also verhindert, dass sich in der mathematischen Betrachtung Schleifen bilden und, welche die erzielte Erreichbarkeits-Wahrscheinlichkeit eines Knotens verfälschen.

$$dR = dR \circ |\emptyset_i|(C_i) \circ |\emptyset_i|\left(C_i^{\mathrm{T}}\right)$$

Dabei ist $\circ$ ein Operator für die elementweise Multiplikation. $C_i^T$ ist die transponierte Matrix $C_i$.

Dabei beschreibt $|\emptyset_i|(A)$ das Setzen von Elementen einer Matrix auf 1 oder 0, abhängig von ihrem Inhalt.

$$|\emptyset_i|(A) = \begin{pmatrix} \emptyset(a_{11}) & \cdots & \emptyset(a_{1n}) \\ \vdots & \ddots & \vdots \\ \emptyset(a_{m1}) & \cdots & \emptyset(a_{mn}) \end{pmatrix} \qquad \emptyset_i(x) = \begin{cases} 1; & x \le i \\ 0; & otherwise \end{cases}$$

Es werden für den nächsten Durchlauf des Algorithmus die neuen Wahrscheinlichkeiten verwendet $c_i = C_b$. Wobei die Wahrscheinlichkeit an sich selbst zu senden wieder auf 0 gesetzt wird ($C_b = C_b \circ K_S(I)$). So können Verbindungswahrscheinlichkeiten für längere Kommunikationspfade j berechnet werden.

Um das Gesamtnetzwerk zu bewerten wird dieses Vorgehen für jeden bekannten Teilnehmer durchgeführt, bis zu der längsten relevanten Anzahl an Kommunikationsverbindungen. Das Verfahren ist für die computerbasierte Berechnung für sehr große Netzwerke optimiert und lässt sich vollständig vektorisieren sowie parallelisieren.

Bezugszeichenliste

1    erste drahtlose Kommunikationsschnittstelle
2    zweite drahtlose Kommunikationsschnittstelle
3    Datenverarbeitungseinheit
4    erste Datenspeichereinheit

5     zweite Datenspeichereinheit

10    technische Anlage

20    Teilnehmer

50    Kommunikationsverbindung

**Patentansprüche**

1. Verfahren zur Datenübertragung zwischen einem ersten Teilnehmer (20) und einem zweiten Teilnehmer (20) eines drahtlosen Netzwerks in einer technischen Anlage (10), wobei das Netzwerk eine Mehrzahl von Teilnehmern (20) aufweist,
   wobei

   einzelnen Kommunikationsverbindungen (50) zwischen jeweils zwei Teilnehmern (20) des drahtlosen Netzwerks jeweils ein Kennwert zugewiesen wird,
   welcher eine Wahrscheinlichkeit einer korrekten Datenübertragung über die jeweilige Kommunikationsverbindung (50) beschreibt;
   mehreren Kommunikationspfaden zwischen dem ersten Teilnehmer (20) und dem zweiten Teilnehmer (20), welche jeweils mindestens eine Kommunikationsverbindung (50) zwischen jeweils zwei Teilnehmern (20) umfassen, jeweils ein Kennwert zugewiesen wird,
   welcher eine Wahrscheinlichkeit einer korrekten Datenübertragung über den jeweiligen Kommunikationspfad beschreibt;
   in Abhängigkeit von den Kommunikationspfaden zugewiesenen Kennwerten mindestens ein Kommunikationspfad zur Datenübertragung ausgewählt wird; und
   Daten zwischen dem ersten Teilnehmer (20) und dem zweiten Teilnehmer (20) über den mindestens einen ausgewählten Kommunikationspfad übertragen werden,
   **dadurch gekennzeichnet, dass**
   eine Mehrzahl von Kommunikationspfaden zur Datenübertragung ausgewählt wird,
   welche eine Kommunikationsgruppe bilden, wobei
   der Kommunikationsgruppe ein Kennwert zugewiesen wird,
   welcher eine Wahrscheinlichkeit einer korrekten Datenübertragung über die Kommunikationspfade der Kommunikationsgruppe beschreibt, wobei
   die Kommunikationspfade einer Kommunikationsgruppe parallel angeordnet sind, und wobei der Kennwert, welcher der Kommunikationsgruppe zugewiesen ist, einen vorgegebenen Grenzwert übersteigt.

2. Verfahren nach Anspruch 1, **dadurch gekennzeichnet, dass**
   mindestens ein Kommunikationspfad eine Mehrzahl von Kommunikationsverbindungen (50) umfasst, welche seriell angeordnet sind.

3. Verfahren nach Anspruch 2, **dadurch gekennzeichnet, dass**

   ein Kennwert, der einer Kommunikationsverbindung (50) zugewiesen wird, in einem Bereich zwischen 0 und 1 liegt, und dass
   ein Kennwert, der einem Kommunikationspfad zugewiesen wird, als Produkt der Kennwerte der einzelnen seriell angeordneten Kommunikationsverbindungen (50) des Kommunikationspfades berechnet wird.

4. Verfahren nach mindestens einem der vorangegangenen Ansprüche, **dadurch gekennzeichnet, dass**

   ein Kommunikationspfad, insbesondere genau ein Kommunikationspfad, zur Datenübertragung ausgewählt wird,
   welchem der höchste Kennwert der den Kommunikationspfaden zugewiesenen Kennwerte zugewiesen ist.

5. Verfahren nach mindestens einem der vorangegangenen Ansprüche, **dadurch gekennzeichnet, dass**

ein Kommunikationspfad, insbesondere genau ein Kommunikationspfad, zur Datenübertragung ausgewählt wird,

dessen Kennwert einen vorgegebenen Grenzwert übersteigt.

**6.** Verfahren nach einem der vorangegangenen Ansprüche, **dadurch gekennzeichnet, dass**
die Anzahl der benötigten redundanten Kommunikationspfade für eine durch ein Datenpaket oder eine Applikation vorgegebene Übertragungswahrscheinlichkeit berechnet wird, welcher der besagte Grenzwert entspricht.

**7.** Verfahren nach mindestens einem der vorangegangenen Ansprüche, **dadurch gekennzeichnet, dass**

ein Kennwert, der einem Kommunikationspfad zugewiesen wird, in einem Bereich zwischen 0 und 1 liegt, und dass
ein Kennwert, der einer Kommunikationsgruppe zugewiesen wird,
als Komplement eines Produkts der komplementären Kennwerte der einzelnen Kommunikationspfade der Kommunikationsgruppe berechnet wird.

**8.** Verfahren nach mindestens einem der vorangegangenen Ansprüche, **dadurch gekennzeichnet, dass**

die Zuweisung der Kennwerte zu den Kommunikationspfaden zwischen dem ersten Teilnehmer (20) und dem zweiten Teilnehmer (20) und/oder
die Auswahl des mindestens einen Kommunikationspfades zur Datenübertragung von dem ersten Teilnehmer (20) durchgeführt werden.

**9.** Verfahren nach mindestens einem der vorangegangenen Ansprüche, **dadurch gekennzeichnet, dass**

die Zuweisung der Kennwerte zu den Kommunikationspfaden zwischen dem ersten Teilnehmer (20) und dem zweiten Teilnehmer (20) und/oder
die Auswahl des mindestens einen Kommunikationspfades zur Datenübertragung von einem zentralen Rechner durchgeführt werden.

**10.** Technische Anlage (10), umfassend

ein drahtloses Netzwerk, welches eine Mehrzahl von Teilnehmern (20) aufweist,
**dadurch gekennzeichnet, dass**
die technische Anlage (10) zur Ausführung des Verfahrens nach mindestens einem der vorangegangenen Ansprüche eingerichtet ist.

**11.** Technische Anlage (10), nach Anspruch 10,
**dadurch gekennzeichnet, dass**
mindestens einer der Teilnehmer (20) als mobiles System, insbesondere als autonom fahrendes Fahrzeug, ausgebildet ist.

**Claims**

**1.** Method for transmitting data between a first subscriber (20) and a second subscriber (20) of a wireless network in a technical facility (10), wherein the network has a plurality of subscribers (20), wherein

individual communication connections (50) between each two subscribers (20) of the wireless network are each assigned a characteristic value which describes a probability of data being transmitted correctly via the particular communication connection (50);
a plurality of communication paths between the first subscriber (20) and the second subscriber (20), which each comprise at least one communication connection (50) between each two subscribers (20), are each assigned a characteristic value which describes a probability of data being transmitted correctly via the particular communication path;

at least one communication path is selected for data transmission on the basis of the characteristic values assigned to the communication paths; and

data are transmitted between the first subscriber (20) and the second subscriber (20) via the at least one selected communication path,

**characterised in that**

a plurality of communication paths that form a communication group are selected for data transmission, wherein the communication group is assigned a characteristic value which describes a probability of data being transmitted correctly via the communication paths of the communication group, wherein

the communication paths of a communication group are arranged in parallel, and wherein the characteristic value assigned to the communication group exceeds a predetermined threshold.

2. Method according to claim 1,
**characterised in that**
at least one communication path comprises a plurality of communication connections (50) arranged in series.

3. Method according to claim 2,
**characterised in that**

a characteristic value assigned to a communication connection (50) is in a range between 0 and 1, and **in that**
a characteristic value assigned to a communication path is calculated as the product of the characteristic values of the individual serially arranged communication connections (50) of the communication path.

4. Method according to at least one of the preceding claims,
**characterised in that**
a communication path, in particular exactly one communication path, that is assigned the highest characteristic value of the characteristic values assigned to the communication paths is selected for data transmission.

5. Method according to at least one of the preceding claims,
**characterised in that**
a communication path, in particular exactly one communication path, whose characteristic value exceeds a predetermined threshold is selected for data transmission.

6. Method according to any of the preceding claims,
**characterised in that**
the number of required redundant communication paths for a transmission probability specified by a data packet or an application is calculated, said threshold corresponding to the transmission probability.

7. Method according to at least one of the preceding claims,
**characterised in that**

a characteristic value assigned to a communication path is in a range between 0 and 1, and **in that**
a characteristic value assigned to a communication group is calculated as the complement of a product of the complementary characteristic values of the individual communication paths of the communication group.

8. Method according to at least one of the preceding claims,
**characterised in that**
the assignment of the characteristic values to the communication paths between the first subscriber (20) and the second subscriber (20) and/or the selection of the at least one communication path for data transmission is/are carried out by the first subscriber (20).

9. Method according to at least one of the preceding claims,
**characterised in that**
the assignment of the characteristic values to the communication paths between the first subscriber (20) and the second subscriber (20) and/or the selection of the at least one communication path for data transmission is/are carried out by a central computer.

10. Technical facility (10) comprising

a wireless network having a plurality of subscribers (20), **characterised in that**
the technical facility (10) is configured for carrying out the method according to at least one of the preceding claims.

11. Technical facility (10) according to claim 10,
**characterised in that**
at least one of the subscribers (20) is configured as a mobile system, in particular as a self-driving vehicle.

**Revendications**

1. Procédé de transmission de données entre un premier participant (20) et un second participant (20) d'un réseau sans fil dans une installation technique (10), le réseau comprenant une pluralité de participants (20),

   une valeur caractéristique respective étant attribuée à différentes liaisons de communication (50) entre respectivement deux participants (20) du réseau sans fil,
   laquelle décrit une probabilité de transmission de données correcte via la liaison de communication respective (50) ;
   une valeur caractéristique respective étant attribuée à plusieurs voies de communication entre le premier participant (20) et le second participant (20), qui comprennent respectivement au moins une liaison de communication (50) entre respectivement deux participants (20),
   laquelle décrit une probabilité de transmission de données correcte via la voie de communication respective ;
   en fonction des valeurs caractéristiques attribuées aux voie de communication, au moins une voie de communication est sélectionnée pour une transmission de données ; et
   des données sont transmises entre le premier participant (20) et le second participant (20) via la au moins une voie de communication sélectionnée,
   **caractérisé en ce que**
   une pluralité de voies de communication sont sélectionnées pour une transmission de données, qui forment un groupe de communication,
   une valeur caractéristique étant attribuée au groupe de communication,
   laquelle décrit une probabilité de transmission de données correcte via la voie de communication du groupe de communication,
   les voies de communication d'un groupe de communication étant agencés parallèlement, et la valeur caractéristique qui est attribuée au groupe de communication dépassant une valeur limite prédéfinie.

2. Procédé selon la revendication 1, **caractérisé en ce que**
   au moins une voie de communication présente une pluralité de liaisons de communication (50), lesquelles sont agencées en série.

3. Procédé selon la revendication 2, **caractérisé en ce que**

   une valeur caractéristique qui est attribuée à une liaison de communication (50) se situe dans une plage allant de 0 à 1, et **en ce que**
   une valeur caractéristique, qui est attribuée à une voie de communication, est calculée en tant que produit des valeurs caractéristiques des différentes liaisons de communication agencées en série (50) de la voie de communication.

4. Procédé selon au moins l'une quelconque des revendications précédentes, **caractérisé en ce que**

   une voie de communication, en particulier une voie de communication précise, est sélectionnée pour une transmission de données,
   à laquelle la valeur caractéristique la plus élevée des valeurs caractéristiques attribuées aux voies de communication est attribuée.

5. Procédé selon au moins l'une quelconque des revendications précédentes, **caractérisé en ce que**

   une voie de communication, en particulier une voie de communication précise, est sélectionnée pour une transmission de données,

dont la valeur caractéristique dépasse une valeur limite prédéfinie.

6. Procédé selon l'une quelconque des revendications précédentes, **caractérisé en ce que**
le nombre des voies de communication redondantes requises pour une probabilité de transmission prédéterminée par un paquet de données ou une application, à laquelle correspond ladite valeur limite, est calculé.

7. Procédé selon au moins l'une quelconque des revendications précédentes, **caractérisé en ce que**

une valeur caractéristique, qui est attribuée à une voie de communication, se situe dans une plage allant de 0 à 1, et **en ce que**
une valeur caractéristique, qui est attribuée à un groupe de communication,
est calculée en tant que complément d'un produit des valeurs caractéristiques complémentaires des différentes voies de communication du groupe de communication.

8. Procédé selon au moins l'une quelconque des revendications précédentes, **caractérisé en ce que**

l'attribution des valeurs caractéristiques aux voies de communication entre le premier participant (20) et le second participant (20) et/ou
la sélection de la au moins une voie de communication pour une transmission de données est/sont effectuées par le premier participant (20).

9. Procédé selon au moins l'une quelconque des revendications précédentes, **caractérisé en ce que**

l'attribution des valeurs caractéristiques aux voies de communication entre le premier abonné (20) et le second abonné (20) et/ou
la sélection de la au moins une voie de communication pour une transmission de données est/sont effectuées par un ordinateur central.

10. Installation technique (10), comprenant

un réseau sans fil qui comprend une pluralité de participants (20),
**caractérisée en ce que**
l'installation technique (10) est conçue pour mettre en oeuvre le procédé selon au moins l'une quelconque des revendications précédentes.

11. Installation technique selon la revendication 10,
**caractérisée en ce que**
au moins l'un des participantes (20) est conçu sous la forme d'un système mobile, en particulier sous la forme d'un véhicule autonome.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009043060 A1
- DE 102010023543 A1
- DE 102007017515 B3
- US 20160094398 A1
- US 20020186665 A1

**In der Beschreibung aufgeführte Nicht-Patentliteratur**

- High-throughput multicast routing metrics in wireless mesh networks. **S. ROY et al.** Ad Hoc Networks. Elsevier, vol. 1, 878-899
- LINKORD: link ordering-based data gathering protocol for wireless sensor networks. Computing. Springer, 12. Juli 2014, vol. 97, 205-236